# EUROPÄISCHE PATENTANMELDUNG

(11) **EP 0 544 640 A1**
(43) Veröffentlichungstag der Anmeldung: **02.06.1993**
(21) Anmeldenummer: 92890240.2
(22) Anmeldetag: 11.11.1992
(51) Int. Cl.: A01K 5/02

(54) **Anlage zur dosierten Abgabe von Flüssigfutter**

(30) Priorität: 26.11.1991 AT 2354/91
(71) Anmelder: SCHAUER MASCHINENFABRIK GESELLSCHAFT M.B.H. & CO. KG, AT-4731 Prambachkirchen 41 (AT)
(72) Erfinder: Vogl, Gerhard, Dipl.-Ing., A-4070 Eferding (AT)
(74) Vertreter: Hübscher, Heiner, Dipl.-Ing.

(57) **Zusammenfassung**

Eine Anlage zur dosierten Abgabe von Flüssigfutter, besitzt einen mit den Futterzutaten beschickbaren Mischbehälter (1) und eine das Futter aus diesem in wenigstens eine Förderleitung (8) fördernde Pumpe (6), wobei entlang der Förderleitung (8) mit Längsabständen voneinander Abgabestellen (10) mit einzeln gesteuert freigebbaren Auslässen (9, 9a) zur dosierten Abgabe von Futter angeordnet und Einrichtungen (14) zur Rückführung eines Futterrestes aus der Förderleitung (8, 8a) vorgesehen sind. Zur Erzielung einer einfachen Bauweise und kurzer Fütterungszeiten auch bei der Abgabe verschiedener Futtersorten ist die wenigstens eine Förderleitung (8, 8a) als Stichleitung ausgebildet und ihr vom Mischbehälter (1) entferntes Ende (8a) über die letzte Abgabestelle (9a) hinaus verlängert sowie mit einem Anschluß (13) für eine Druckluftquelle (14) versehen, von der aus die Förderleitung (8, 8a) zur Rückführung eines Futterrestes mit Druckluft beaufschlagbar ist.

## Beschreibung

Die Erfindung betrifft eine Anlage zur dosierten Abgabe von Flüssigfutter, gemäß dem Oberbegriff des Patentanspruches 1.

Bei Anlagen dieser Art wird der Mischbehälter vorzugsweise als Wiegebehälter ausgebildet, so daß an ihm sowohl die Mengen der einzelnen Futterzutaten als auch die Einzelabgabemengen des aufbereiteten Futters an die Auslasse eingestellt bzw. kontrolliert werden können. Die Dosierung der Futterabgabe an den Auslassen erfolgt anlagenbedingt verschieden durch Überwachung der Gewichtsabnahme am Futterbehälter, durch Steuerung der Öffnungszeiten der Auslässe und auch durch Kombinationen dieser Austeilverfahren, wobei man z. B. für die Öffnungszeiten der Abgabeventile Sollzeiten vorgibt, die Istmenge der Abgabe über die Wiegeeinrichtung des Behälters erfaßt und nach den Abweichungen der Istwerte von den Sollwerten Korrekturen bei den Öffnungszeiten der Ventile über einen Rechner, der normalerweise integrierender Bestandteile einer Steuereinrichtung für Fütterungsanlagen ist, vornimmt.

Eine Rückführung eines Futterrestes ist prinzipiell für die Bestimmung der bei einem Fütterungsvorgang tatsächlich abgegebenen Futtermenge und damit für genaue Korrekturen erwünscht, vielfach aber sogar aus hygienischen Gründen notwendig. Dabei ist es bekannt, die Förderleitung als zum Mischbehälter zurückgeführte Ringleitung auszubilden. Nach der EP-A-O 163 080 ist zusätzlich ein mit einem eigenen Wassereinlaß versehener Zwischenbehälter mit absperrbarem Auslaß in den Mischbehälter vorgesehen, der über ein weiteres Absperrorgan im Endbereich einer Ringleitung angeschlossen werden kann. Während des Fütterungsbetriebes nimmt dieser Zwischenbehälter einen Wasservorrat auf, der wenigstens dem Füllvolumen der Ringleitung entspricht. Nach Entleerung des Mischbehälers beim Fütterungsbetrieb wird dieser Wasservorrat in den Mischbehälter geleitet, wobei mit seiner Hilfe das noch in der Ringleitung befindliche Futter zu der bzw. den letzten Abgabestellen ausgedrückt wird. Überschüssiges Wasser wird über die Ringleitung in den Zwischenhbehäler gepumpt. Beim nächsten Fütterungsvorgang wird wieder im Mischbehälter Futter zubereitet und für die Fütterung in die Ringleitung gepumpt, wobei mit Hilfe dieses Futters das in der Ringleitung befindliche Wasser in den Mischbehäler ausgedrückt wird. Eine Rückführung von Futterresten in den Mischbehälter ist nicht vorgesehen.

Wenn die Förderleitung wahlweise mit wenigstens zwei verschiedenen Futtersorten bzw. -mischungen zur Abgabe an vorwählbaren Auslässen beschickt wird, ist beim genauen Dosieren beim wechsel der Futtersorte oder -mischung innerhalb eines Gesamtfütterungsvorganges eine Rückführung des Restes der bis dahin ausgegebenen Futtersorte bzw. -mischung notwendig bzw. zumindest erwünscht. Auch hier kann man die Förderleitung als zum Mischbehälter zurückführende Ringleitung ausbilden und beim wechsel auf ein andere Futtersorte den in der Leitung befindlichen Futterrest mittels der neu zubereiteten Futtermischung aus der Leitung herausdrücken, wonach erst mit der Abgabe der neuen Futtersorte an den entsprechenden Auslässen begonnen wird. Auch ein Zurückführen des noch in der Leitung befindlichen Futterrestes mit Hilfe von in die Förderleitung eingedrücktem Wasser in den Mischbehälter ist bekannt. Eine Rückführung des Futterrestes in den Mischbehälter ist nur dann möglich bzw. sinnvoll, wenn verschiedene abzugebende Futtermischungen aus untereinander gleichen Zutaten bestehen, die bei den einzelnen Futtermischungen nur ein verschiedenes Mischungsverhältnis haben. Es kann hier die Futterrestmenge erfaßt und bei der Mischung eine Änderung der Zutatenmengen gegenüber den Vorgabemengen unter Berücksichtigung der Bestandteile der Futterrestmenge vorgenommen werden, was allerdings eine entsprechende Programmierung der Steuereinrichtung und damit einen entsprechenden Rechner voraussetzt. Wenn bei den verschiedenen Futtersorten verschiedene zutaten vorzusehen sind, ist es bisher üblich, für die verschiedenen Futtermischungen auch verschiedene Mischbehälter oder unterteilte Mischbehälter vorzusehen, wobei die Ringleitung für die Entleerung des jeweiligen Futterrestes in den richtigen Mischbehälter bzw. die richtige Mischbehälerabteilung diesen zugeordnet gesteuert betätigbare Auslässe erhalten muß.

Bei allen bekannten Konstruktionen ergibt sich durch die Ausbildung der Förderleitung als Ringleitung ein zusätzlicher Anlagenaufwand und es entstehen im Fütterungsbetrieb relativ lange Pausen beim Wechsel der Futtermischung, was sowohl im Hinblick auf die Arbeitsorganisation als auch für das Verhalten der Tiere nachteilig ist, da z. B. Tiere, die erst beträchtliche Zeit nach den Tieren im Nachbarabteil eines Stalles ihr Futter erhalten, unruhig werden und auch die Nachbartiere beim Fressen stören.

Aufgabe der Erfindung ist die Schaffung einer Anlage der eingangs genannten Art, bei der unter Veringerung des Anlagenaufwandes eine gezielte Rückführung des jeweiligen in der Förderleitung befindlichen Futterrestes ermöglicht wird und die nach einer Weiterbildung die Verabreichung verschiedener Futtersorten bzw. -mischungen, auch von Mischungen aus unterschiedlichen Zutaten an verschiedene Abgabestellen, problemlos zuläßt, wobei beim Wechsel der Futtersorte nur kurze Unterbrechungen auftreten und die Gesamtfütterungszeit verkürzt wird.

Die gestellte Aufgabe wird durch die Merkmale des Patentanspruches 1 gelöst.

Es wird keine Ringleitung mehr benötigt, so daß gegenüber bekannten Anlagen mit einer wesentlich kürzeren Leitungslänge das Auslangen gefunden wird. Der Hauptvorteil der erfindungsgemäßen Ausführung besteht jedoch darin, daß der gesamte Futterrest mit Druckluft, also einem Medium für das sich keine Probleme für die Entsorgung und Zwischenlagerung ergeben, rasch zurückgefördert werden kann, wobei die Förderleitung nach der Rückförderung frei ist. Bei Verwendung eines Wiege-Mischbehälters kann die Restfuttermenge genau erfaßt und bei Dosierungskorrekturen berücksichtigt werden.

Bei einer Ausbildung nach Anspruch 2 nimmt der Zwischenbehälter beim Wechsel der Futtermischung die Restfuttermenge auf, wenn die neue Futtermischung keine Reste des bis dahin abgegebenen Futters enthalten soll. Bei zwei verschiedenen zu verabreichenden Futtermischungen wird vorteilhaft zunächst mit der einen Futtermischung begonnen und dann die Fütterung mit der zweiten Futtermischung durchgeführt, wonach der Futterrest aus der zweiten Fütterung in den Mischbehälter zurückgefördert und beim nächsten Fütterungsvorgang unter Verwertung dieses Futterrestes mit der zweiten Futtersorte begonnen wird. Vor der Rückführung des Restes dieser zweiten Futtersorte in den Zwischenbehälter wird der den Rest der ersten Futtermischung enthaltende Zwischenbehälter wieder in den Mischbehälter entleert. Wenn mehr als zwei Futtersorten zu verabreichen sind, wird man eine zusätzliche Anzahl von Zwischenbehältern verwenden. Der Zwischenbehälter kann im Bedarfsfall durch Druckluftbeaufschlagung über die leere Förderleitung rasch in den Mischbehälter entleert werden, wobei man für alle diese Vorgänge von der zentralen Steuereinheit gesteuerte Absperrorgane verwenden kann. Über den eigenen Wassereinlaß wird der im Zwischenbehälter befindliche Futterrest durch die Wasserzufuhr aufgeschwemmt und der Zwischenbehälter wird mit dem Wasser gespült, so daß auch im Zwischenbehälter keine Mischung der Futtersorten vorkommt. Die zugeführte Wassermenge wird erfaßt und bei der Rezeptur der eben im Mischbehälter zubereiteten Futtermischung berücksichtigt, wobei man während dieses Mischvorganges das benötigte Wasser sogar ausschließlich über den Mischbehälter zuführen kann.

Eine konstruktiv vorteilhafte Ausgestaltung ist in Anspruch 3 angegeben.

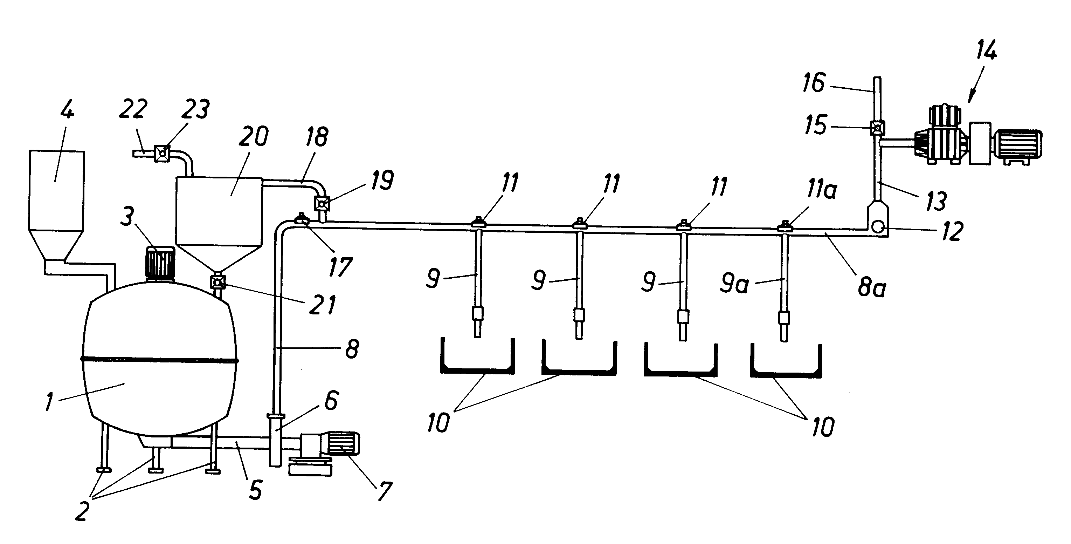

In der Zeichnung ist als Ausführungsbeispiel eine erfindungsgemäße Fütterungsanlage im Schema dargestellt.

Die Anlage besitzt einen Mischbehälter 1, der mit seinen Füßen 2 auf Wiegeeinrichtung abgestützt werden kann und ein über einen Motor 3 antreibbares Mischwerk enthält. Der Mischbehälter 1 kann von Vorratssilos, von denen nur einer (4) dargestellt wurde, allenfalls über Zubringerförderer mit verschiedenen Futterzutaten beschickt werden, deren Menge über die Wiegeeinrichtung erfaßt und über eine zentrale Steuereinheit, die Absperrorgane in den zum Mischbehälter 1 führenden Leitungen öffnet und schließt bzw. Zubringerförderer ein- und ausschaltet, nach vorgegebenen Sollwerten bestimmt wird.

Eine Auslaßleitung 5 des Mischbehälters führt zu einer selbstansaugenden Förderpumpe 6, die von einem Motor 7, der ebenfalls von der zentralen Steuereinheit aus- und eingeschaltet wird, antreibbar ist. Die Pumpe 6 fördert in eine Förderleitung 8, die als Stichleitung ausgebildet ist, von der mehrere Auslässe 9, 9a zu Abgabestellen 10, z. B. Futtertrögen führen. Jedem Auslaß ist in der Leitung 8 ein eigenes von der zentralen Steuereinheit gesteuertes Dosierventil 11, 11a zugeordnet. Die Stichleitung 8 ist über die letzte Abgabestelle 9a hinaus verlängert, wobei diese Verlängerung 8a über ein gegen Flüssigkeitsdurchtritt sperrendes Ventil 12 od. dgl., z. B. einen Kugelschwimmer an eine Druckluftleitung 13 anschließt, die von einem Turbokompressor 14 her, der ebenfalls von der zentralen Steuereinheit ein- und ausgeschaltet werden kann, mit Druckluft beschickt wird. Ein Absperrorgan 15 in einer Auslaßleitung 16 ermöglicht den Austritt der verdrängten Luft, wenn die Leitung 8, 8a wieder mit Flüssigfutter bis zum Entlüftungsventil 12 gefüllt wird. Bei der Beaufschlagung mit Druckluft wird das Absperrorgan 15 geschlossen. Die Leitung 8 kann sich vor dem der Pumpe 6 nächstliegenden Auslaß 9a verzweigen, wenn mehrere Stichleitungen 8 vorhanden sind.

Zwischen der Pumpe 6 und dem ersten Auslaß 9 ist in der Leitung 8 ein Absperrventil 17 vorhanden und zwischen diesem Absperrventil 17 und dem ersten Auslaß 9 zweigt eine Leitung 18 mit Absperrorgan 19 ab, die in einen Zwischenbehälter 20 führt, der über ein Absperrorgan 21 in den Mischbehälter 1 entleert werden kann. Für den Mischbehälter 20 ist eine eigene Wasserzufuhrleitung 22 mit Absperrorgan 23 vorgesehen, wobei alle diese Absperrorgane wieder von der zentralen Steuereinheit entsprechend dem gewünschten Arbeitsablauf gesteuert werden.

Wenn eine Verfütterung mit zwei Futtersorten oder -mischungen vorgesehen ist, wird zuerst im Mischbehälter 1 die erste Futtermischung zubereitet, wonach die Pumpe 6 eingeschaltet und das Futter in die Leitung 8 gepumpt wird. In der Leitung 8 enthaltene Luft entweicht über das zusätzlich ein weiteres Vordringen des Futters verhindernde Entlüftungsventil 12 und das Luftauslaßventil 15. Nun werden nacheinander die Absperrorgane 11 bzw. 11a für die mit der momentan geförderten Futtermischung zu beschickenden Auslässe geöffnet, wobei eine Dosierung durch Einstellung der Öffnungszeiten unter allfälliger gleichzeitiger Kontrolle der Gewichtsabnahme des Mischbehälters erfolgt. Ist der Fütterungsvorgang für diese Futtermischung beendet,wird die Pumpe 6 abgeschaltet, das Absperrorgan 17 wird geschlossen, daß Absperrorgan 19 geöffnet und der Turbokompressor 14 wird eingeschaltet, so daß er über das spätestens bei der Druckluftbeaufschlagung öffnende Entlüftungsventil 12 die Förderleitung 8a, 8 beaufschlagt und den in ihr befindlichen Futterrest über die Leitung 18 in den Zwischenbehälter 20 fördert, dessen Absperrorgan 21 geschlossen ist. Bereits in der Zwischenzeit kann in dem entleerten Mischbehälter 1 die nächste Futtermischung vorbereitet und nach Entleerung der Förderleitung 8a, 8 an den für diese Futtermischung ausgewählten Auslässen über die Absperrorgane 11, 11a abgegeben werden. Nach Beendigung der Abgabe dieser zweiten Futtermischung wird bei geöffnetem Absperrorgan 17 und geschlossenem Absperrorgan 19 der Futterrest durch Einschalten des Turbokompessors 14 über die Pumpe 6 und die Auslaßleitung 5 in den Mischbehälter zurückgedrückt. Bei der nächsten Fütterungsperiode wird mit der zweiten Futtermischung begonnen und der Futterrest im Mischbehälter 1 bei dieser Futtermischung verwertet. Ist diese zweite Futtermischung dann abgegeben, und der Mischbehälter 1 leer, so wird zunächst das Absperrorgan 21 geöffnet und der Futterrest der ersten Futtermischung aus der vorigen Fütterungsperiode aus dem Zwischenbehälter 20 in den Mischbehälter überstellt, wobei bei und nach dieser Überstellung über die Leitung 22 und durch Öffnen des Absperrorganes 23 dem Zwischenbehälter Wasser zugeführt wird, was die Ausschwemmung des Futterrestes erleichtert und wodurch dieser Zwischenbehälter 20 gereinigt wird. Die Restfuttermenge und Wassermenge werden bei der Herstellung der neuen Futtermischung berücksichtigt. Nun wird kurzzeitig das Absperrorgan 17 geschlossen, das Absperrorgan 10 geöffnet und der Turbokompressor 14 eingeschaltet, so daß der Futterrest in den Zwischenbehälter 20 gefördert wird, bevor mit der Futterausteilung der ersten Futtermischung aus dem Mischbehälter 1 begonnen wird.

Wenn bei der letztgenannten Ausführung auch eine Mischung des in dem zwischen dem Auslaß des Mischbehälters 1 und der Abzweigstelle der Leitung 18 befindlichen Futterrestes vermieden werden soll, kann ein weiteres Absperrorgan in der Leitung 8 bezogen auf die normale Förderrichtung unmittelbar nach der Mündung der Leitung 18 vorgesehen werden. Wird dieses Absperrorgan geschlossen und das Absperrorgan 17 geöffnet, so kann zunächst ein Futterrest, der noch im Mischbehälter 1 vorhanden ist, in den Zwischenbehälter 20 überführt werden. Anschließend wird die neue Futtermischung zubereitet und mit der Förderung begonnen, bis die Gewichtsabnahme des Mischbehälters 1 dem Füllgewicht des Leitungszuges bis zur Einmündung der Leitung 18 entspricht, so daß die vorige Futtermischung in den Zwischenbehälter 20 gelangt. Nun ist die gesamte weitere Leitung und auch der erwähnte Leitungsabschnitt mit der neuen Futtermischung beschickbar.

Bei allen Varianten tritt wenigstens einmal bei einer Fütterungsperiode der Fall ein, daß durch Rückförderung in den Mischbehälter 1 in diesem der Futterrest aus zu viel zubereitetem Futter und Gesamtinhalt des Förderleitungszuges ab dem Auslaß des Mischbehälters 1 vorhanden ist, so daß dieser Wert genau erfaßt und zur Korrektur der Dosierung bei der nächsten Verfütterung dieser Futtersorte verwendet werden kann. Ferner wird bei jeder Fütterungsanlage und jedem Futter das Füllgewicht des gesamten Leitungszuges exakt erfaßbar, so da8 es bei der Zubereitung der Futtermischungen berücksichtigt werden kann.

## Patentansprüche

1. Anlage zur dosierten Abgabe von Flüssigfutter, mit einem mit den Futterzutaten beschickbaren Mischbehälter (1) und einer das Futter aus diesem in wenigstens eine Förderleitung (8) fördernden Pumpe (6), wobei entlang der Förderleitung (8) mit Längsabständen voneinander Abgabestellen (10) mit einzeln gesteuert freigebbaren Auslässen (9, 9a) zur dosierten Abgabe von Futter angeordnet und Einrichtungen (4) zur Rückführung eines Futterrestes aus der Förderleitung (8) vorgesehen sind, dadurch gekennzeichnet, daß die wenigstens eine Förderleitung (8, 8a) als Stichleitung ausgebildet und ihr vom Mischbehälter (1) entferntes Ende (8a) über die letzte Abgabestelle (9a) hinaus verlängert und mit einem Anschluß (13) für eine Druckluftquelle (14) versehen ist, von der aus die Förderleitung (8, 8a) zur Rückführung eines Futterrestes mit Druckluft beaufschlagbar ist.

2. Anlage nach Anspruch 1, dadurch gekennzeichnet, daß ein in den Mischbehälter (1) entleerbarer, mit einem eigenen Wassereinlaß (22, 23) versehender Zwischenbehalter (20) vorgesehen ist und daß dieser Zwischenbehälter (20) über eine vor der ersten Abgabestelle von der Förderleitung (8, 8a) abzweigende Leitung (18) und Absperrorgane (17, 19) von der Förderleitung (8) absperrbar und wahlweise mit dem zum Mischbehälter (1) oder dem zu den Auslässen (9, 9a) führenden Abschnitt der Förderleitung (8, 8a) verbindbar ist.

3. Anlage nach Anspruch 1 oder 2, dadurch gekennzeichnet, daß als Druckluftquelle ein ein- und ausschaltbarer Turbokompressor (14) dient, wobei in dem über die letzte Abgabestelle (9a) verlängerten Ende (8a) der Förderleitung (8) vor dem Anschluß (13) dieses Turbokompressors (14) ein beim Förderbetrieb der Pumpe (6) öffnendes Luftauslaßventil (15) angebracht ist.
